# EUROPEAN PATENT SPECIFICATION

(11) **EP 2 449 733 B1**
(45) Date of publication and mention of the grant of the patent: **24.09.2014**
(21) Application number: 10727629.7
(22) Date of filing: 22.06.2010
(51) Int. Cl.: H04L 12/723, H04L 29/06

(54) **LINKING INNER AND OUTER MPLS LABELS**
VERBINDUNG VON INNEREN UND ÄUSSEREN MPLS-ETIKETTEN
LIAISON D'ÉTIQUETTES MPLS INTERNES ET EXTERNES

(30) Priority: 30.06.2009 US 495423
(43) Date of publication of application: 09.05.2012
(73) Proprietor: ALCATEL LUCENT, 92100 Boulogne-Billancourt (FR)
(72) Inventor: PAGE, Gregory, Sandy, UT 84094 (US)
(74) Representative: Knecht, Ulrich Karl
(86) International application number: PCT/US2010/039402
(87) International publication number: WO 2011/002629

(56) References cited:
- EP-A1- 1 775 908
- US-A1- 2008 084 881

## Description

### Field of the invention

This invention relates to linking inner and outer MPLS labels, and more particularly but not exclusively, to a method of linking inner and outer MPLS labels in a database for the purpose of excluding malicious packets.

### Background of the Invention

This section introduces aspects that may be helpful in facilitating a better understanding of the invention. Accordingly, the statements of this section are to be read in this light and are not to be understood as admissions about what is in the prior art or what is not in the prior art.

In telecommunications Multi-Protocol Label Switching (MPLS) refers to a system and method for carrying data between telecom network equipment elements in a network. Such network equipment elements include, among other examples, routers and switches and in particular network equipment which performs the function of Label Edge Routing and Label Switch Routing.

Multi-Protocol Label Switching functionality is described comprehensively in the IETF technical documents RFC-3031 and RFC-3032. Multi-Protocol Label Switching can be conceived to operate as a protocol that lies between the OSI Model layers of Layer 2 (Data Link Layer) and Layer 3 (Network Layer). As such it acts to provide a unified data-carrying service that can carry many different kinds of traffic, including native ATM (Asynchronous Transfer Mode), SONET, and Ethernet frames, as well as IP packets.

Data packets in an MPLS network are prefixed with an MPLS header which contains one or more labels. This is called a label stack and is used to switch the associated data packet as it traverses the MPLS network instead of, for example, a lookup into an Internet Protocol (IP) routing table.

Packet entry and exit from an MPLS network occurs via Label Edge Routers (LERs) which push an MPLS label onto an incoming packet upon entry to the network, and pop the MPLS label off of the outgoing packet as it exits the network.

Within the MPLS network are routers which perform routing based only upon the MPLS label, and are denoted Label Switched Routers (LSRs). In some applications, the packet arriving at the LER may already possess an MPLS label, and in this case the LER may push a second label onto the packet. Two examples of services which use a second label are Virtual Private LAN Services (VPLS) and Layer-3 Virtual Private Networks (L3-VPNs). As may be readily seen from the description that follows, other services may use a second label on the packet.

L3-VPNs use a two-level MPLS label wherein the inner label carries VPN-specific information from LERs to LERs. The outer label carries the hop-by-hop MPLS forwarding information. The LSRs in the MPLS network only read and swap the outer label as the packet passes through the network. They do not read or act upon the inner VPN label and that information is tunneled across the network.

In an L3-VPN, the LER and LSR routers are IP routing peers. The LER router provides the LSR router with the routing information for the customer's private network behind it. The LSR router stores this private routing information in a Virtual Routing and Forwarding (VRF) table; each VRF is essentially a private IP network. The LSR router maintains a separate VRF table for each VPN, thereby providing appropriate isolation and security. VPN users have access only to sites or hosts within the same VPN. In addition to the VRF tables, the LSR router also stores the normal routing information it needs to send traffic over the public internet.

Virtual private LAN service (VPLS) is a way to provide Ethernet based multipoint to multipoint communication over IP/MPLS networks. It allows geographically dispersed sites to share an Ethernet broadcast domain by connecting sites through pseudo-wires.

In a VPLS, the local area network (LAN) at each site is extended to the edge of the provider network. The provider network then emulates a switch or bridge to connect all of the customer LANs to create a single bridged LAN.

With LDP, each LSR router in the provider network must be configured to participate in a given VPLS, and, in addition, be given the addresses of other LSRs participating in the same VPLS. A full mesh of LDP sessions is then established between these LSRs. LDP is then used to create an equivalent mesh of pseudo-wires between those LSRs.

VPLS MPLS packets have a two-label stack. The outer label is used for normal MPLS forwarding in the service provider's network. If Border Gateway Protocol (BGP) is used to establish the VPLS, the inner label is allocated by a LSR as part of a label block. If LDP is used, the inner label is a virtual circuit ID assigned by LDP when it first established a mesh between the participating LSRs. Every LSR keeps track of assigned inner label, and associates these with the VPLS instance.

US2008/0084881 discloses the processing of mPLS packets having an outer label and an inner label.

EP1775908 prevents the malicious injection of mPLS packets in a label switched path.

Proper security (and proper function if support is provided for an inner label on one VPN which matches an inner label on another VPN) requires that the inner label should only be handled when arriving at the LER with the appropriate outer label.

Currently, an LER receiving a L3-VPN or VPLS packet processes the outer label and the inner label without regard for whether they are associated. The outer label is removed and the inner label is processed independently of the outer label. As a result of this handling, malicious packets can be sent into remote VLANs by selection of the appropriate outer label.

As is evident, allowing labels malicious packets entry into remote VLANs is an undesirable aspect of these protocols.

### Summary of the Invention

An object of the present invention is to provide a method for linking outer and inner labels within the processing of MPLS packets.

According to an aspect of the present invention there is provided a method executed within a network equipment element to cause the network equipment element to process an MPLS packet having an outer label and an inner label, the method including the steps of: establishing a first database containing entries corresponding to valid outer labels; associating a key with each entry in the first database; establishing a second database containing entries corresponding to a combination of the key with valid inner labels and the appropriate actions associated with the valid inner labels; retrieving the associated key when the MPLS packet's outer label has a corresponding entry in the first database; and combining the associated key with the MPLS packet's inner label to generate a lookup entry value for the second database;
using said lookup entry value to check for the corresponding entry in said second database (214); and
if no match is found, dropping said MPLS packet and flagging a security alarm (216),
if the match is found, retrieving and executing the associated action (218),
wherein said combining step further comprises:
appending said associated key to said inner label or
hashing said associated key to said inner label.

In some embodiments of the invention the said network equipment element would be one of either a Label Switched Router or a Label Edge Router.

Advantages of the present invention include dropping malicious packets arriving with valid outer labels.

In accordance with another aspect of the present invention there is provided an apparatus for use in programming a network equipment element to cause the network equipment element to process an MPLS packet having an outer label and an inner label, the apparatus comprising computer useable media accessible to the network equipment element, wherein the computer useable media include at least one computer program that is capable of causing the network equipment element to perform:
establishing a first database containing entries corresponding to valid outer labels;
associating a key with each entry in said first database;
establishing a second database containing entries corresponding to a combination of said key with valid inner labels and appropriate actions associated with said valid inner labels;
retrieving said associated key when said outer label has a corresponding entry in said first database (213);
combining said associated key with said inner label to generate a lookup entry value for said second database;
using said lookup entry value to check for a corresponding entry in said second database (214); and
if no match is found, dropping said MPLS packet and flagging a security alarm (216),
if the match is found, retrieving and executing the associated action (218),
wherein said combining step further comprises:
   appending said associated key to said inner label or
   hashing said associated key to said inner label.

Under some embodiments, the network equipment element may be a Label Switched Router, and in other embodiments a Label Edge Router.

### Brief Description of the drawings

The present invention will be further understood from the following detailed description of embodiments of the invention, with reference to the drawings in which:
**Fig. 1** illustrates a method for handling the two labels in an L3-VPN in accordance with the prior art; and
**Fig. 2** illustrates a method for handling the two labels in an L3-VPN in accordance with an embodiment of the present invention.

To facilitate understanding, identical reference numerals have been used, where possible, to designate identical elements that are common to the figures.

### Detailed Description

Multi-Protocol Label Switching (MPLS) protocol assigns labels to packets for transport across a network. The labels are contained in an MPLS header inserted into the data packet

These short, fixed-length labels carry the information that tells each network equipment element, for example an LER or LSR, how to process and forward the packets, from source to destination. They have significance only on a local network equipment element to network equipment element connection. As each network equipment element forwards the packet, it swaps the current label for the appropriate label to route the packet to the next network equipment element. This method enables very-high-speed switching of the packets through the core MPLS network.

MPLS relies on traditional IP routing protocols to advertise and establish the network topology. MPLS is then overlaid on top of this topology. Since route planning occurs ahead of time and at the edge of the network (where the customer and service provider network meet), MPLS-labeled data requires less router horsepower to traverse the core of the MPLS network.

MPLS networks establish Label-Switched Paths (LSPs) for data crossing the network. An LSP is defined by a sequence of labels assigned to nodes on the packet's path from source to destination. LSPs direct packets in one of two ways: hop-by-hop routing or explicit routing. In hop-by-hop routing, each MPLS router independently selects the next hop for a given Forwarding Equivalency Class (FEC). A FEC describes a group of packets of the same type; all packets assigned to a FEC receive the same routing treatment. In explicit routing, the entire list of network equipment elements traversed by the LSP is specified in advance. The path specified could be optimal or not, but is based on the overall view of the network topology and, potentially, on additional constraints, and is referred to as Constraint-Based Routing.

As the network is established and signaled, each MPLS network equipment element builds a Label Information Base (LIB), a table that specifies how to forward a packet. This table associates each label with its corresponding FEC and the outbound port to forward the packet to. This LIB is typically established in addition to the routing table and Forwarding Information Base (FIB) that traditional routers maintain.

Connections are signaled and labels are distributed among network equipment elements in an MPLS network using one of several signaling protocols, including Label Distribution Protocol (LDP) and Resource reservation Protocol with Tunneling Extensions (RSVP TE). Alternatively, label assignment can be piggybacked onto existing IP routing protocols such as BGP.

The most commonly used MPLS signaling protocol is LDP. LDP defines a set of procedures used by MPLS network equipment elements to exchange label and stream mapping information. It is used to establish LSPs, mapping routing information directly to Layer 2 switched paths. It is also commonly used to signal at the edge of the MPLS network the critical point where non-MPLS traffic enters. Such signaling is required for establishing MPLS VPNs.

MPLS allows multiple labels (called a label stack) to be carried on a packet. Label stacking enables MPLS network equipment elements to differentiate between types of data flows, and to set up and distribute LSPs accordingly. Relevant to embodiments of the present invention, a common use of label stacking is for establishing tunnels through MPLS networks for VPN applications.

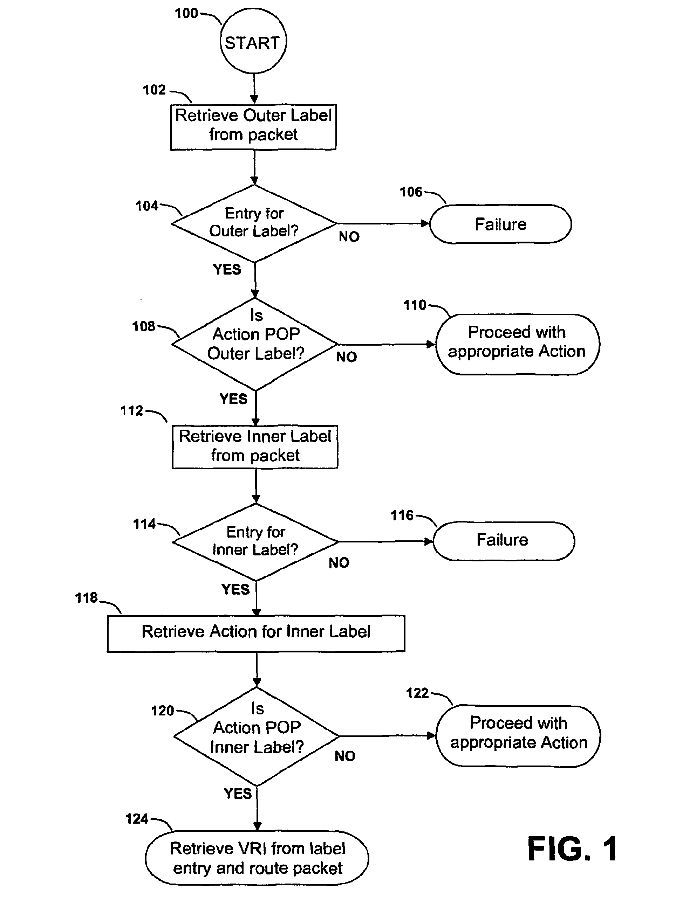

Referring now to Fig. 1, there may be seen a flowchart depicting the normal steps for handling a multiple label packet arriving at an network equipment element. The method commences at 100.

At 102 the outer label is retrieved from the MPLS packet. At 104 the LIB is consulted as to whether it has an entry corresponding to the outer label. If no entry corresponds then the method ends at 106.

If there is an entry for the outer label it is checked as to whether it is a POP action at 108. If the entry is not a POP action, then control passes to 110 to proceed with the appropriate action.

If the entry is for a POP action, then the outer label is POPPED and the inner label is retrieved at step 112.

At 114 the LIB is consulted as to whether there is an entry for the inner label. If no entry corresponds then the method ends at 116.

If there is an entry for the inner label it is checked as to whether it is a POP action at 120. If the entry is not a POP action, then control passes to 122 to proceed with the proper action.

If the entry is for a POP action, then the Virtual Routing Instance (VRI) is retrieved from entry corresponding to the label and the packet is routed accordingly at 124.

By way of contrast, an embodiment according to the present invention adds an additional step in order to preclude malicious packet forwarding. As per normal operation of the protocol, the software or hardware processing the ingressing MPLS packets is provided with a database containing the labels and their respective actions. This label database is augmented so that entries for outer labels have an attribute that is used as a key when looking up the inner label. Having matched the outer label, the software or hardware takes the key associated with the outer label and hashes it to the inner label creating a new key. This hashing may be a simple appending or a more complex operation. The resulting new key is referenced in the table to resolve the inner label action. If no match is found, the packet is dropped (or used to detect a security issue).

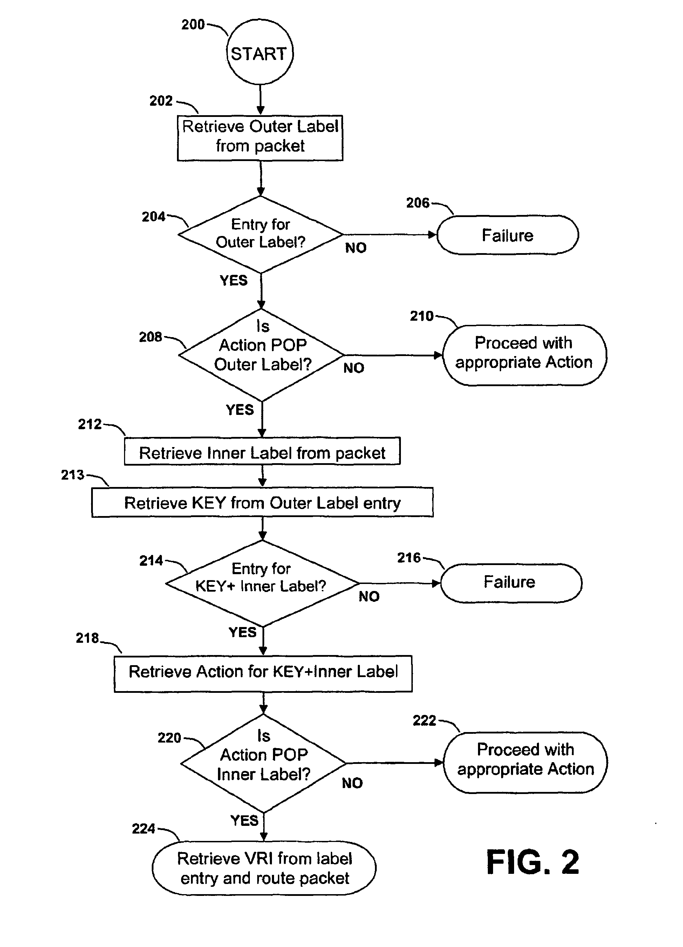

Referring to Fig. 2 there may be seen a flowchart depicting a method for handling the two labels in an L3-VPN in accordance with an embodiment of the present invention. The method commences at 200. (Note: for ease of reference corresponding steps between Fig. 1 and Fig. 2 carry corresponding reference numbers.)

At 202 the outer label is retrieved from the MPLS packet. At 204 the label database is consulted as to whether it has an entry corresponding to the outer label. If no entry corresponds then the method ends at 206.

If there is an entry for the outer label it is checked as to whether it is a POP action at 208. If the entry is not a POP action, then control passes to 210 to proceed with the appropriate action.

If the entry is for a POP action, then the outer label is POPPED and the inner label is retrieved at step 212. At 213 the outer label is used to retrieve a key from the database corresponding to the outer label.

At 214 the key and inner label are combined and the database is consulted as to whether there is an entry for the combination of key and inner label. If no entry corresponds then the method ends at 216.

If there is an entry for the combination of key and inner label it is checked as to whether it is a POP action at 220. If the entry is not a POP action, then control passes to 222 to proceed with the proper action.

If the entry is for a POP action, then the Virtual Routing Instance (VRI) is retrieved from entry corresponding to the label and the packet is routed accordingly at 224.

While the foregoing is directed to various embodiments of the present invention, other and further embodiments of the invention may be devised without departing from the basic scope thereof. As such, the appropriate scope of the invention is to be determined according to the claims, which follow.

## Claims

1. A method executed within a network equipment element to cause the network equipment element to process an MPLS packet having an outer label and an inner label, said method comprising:
establishing a first database containing entries corresponding to valid outer labels; the method being **characterised by** the following steps:
associating a key with each entry in said first database;
establishing a second database containing entries corresponding to a combination of said key with valid inner labels and appropriate actions associated with said valid inner labels;
retrieving said associated key when said outer label has a corresponding entry in said first database (213);
combining said associated key with said inner label to generate a lookup entry value for said second database;
using said lookup entry value to check for the corresponding entry in said second database (214); and
if no match is found, dropping said MPLS packet and flagging a security alarm (216),
if the match is found, retrieving and executing the associated action (218),
wherein said combining step further comprises:
appending said associated key to said inner label or
hashing said associated key to said inner label.

2. A method as claimed in claim 1 wherein said network equipment element comprises either a Label Switched Router or a Label Edge Router.

3. An apparatus for use in programming a network equipment element to cause the network equipment element to process an MPLS packet having an outer label and an inner label, the apparatus comprising computer useable media accessible to the network equipment element, wherein the computer useable media include at least one computer program that is capable of causing the network equipment element to perform:
establishing a first database containing entries corresponding to valid outer labels;
associating a key with each entry in said first database;
establishing a second database containing entries corresponding to a combination of said key with valid inner labels and appropriate actions associated with said valid inner labels;
retrieving said associated key when said outer label has a corresponding entry in said first database (213);
combining said associated key with said inner label to generate a lookup entry value for said second database;
using said lookup entry value to check for a corresponding entry in said second database (214); and
if no match is found, dropping said MPLS packet and flagging a security alarm (216),
if the match is found, retrieving and executing the associated action (218),
wherein said combining step further comprises:
appending said associated key to said inner label or
hashing said associated key to said inner label.

4. The apparatus of claim 3, wherein said network equipment element comprises either a Label Switched Router or a Label Edge Router.

## Patentansprüche

1. Verfahren, welches in einem Netzwerkausrüstungselement durchgeführt wird, um zu bewirken, dass das Netzwerkausrüstungselement ein mit einem äußeren Label und einem inneren Label, versehenes MPLS-Packet verarbeitet, wobei das Verfahren umfasst:
Einrichten einer ersten Datenbank mit Einträgen, welche gültigen äußeren Labels entsprechen, wobei das Verfahren durch die folgenden Schritte gekennzeichnet ist:
Zuordnen eines Schlüssels zu jedem Eintrag in der besagten ersten Datenbank;
Einrichten einer zweiten Datenbank mit Einträgen, welche einer Kombination des besagten Schlüssels mit gültigen inneren Labels und mit den besagten gültigen inneren Labels assoziierten geeigneten Aktionen entsprechen;
Abrufen des besagten assoziierten Schlüssels, wenn das besagte äußere Label einen entsprechenden Eintrag in der besagten ersten Datenbank (213) hat;
Kombinieren des besagten assoziierten Schlüssels mit dem besagten inneren Label, um einen Lookup-Eingabewert für die besagte zweite Datenbank zu erzeugen;
Verwenden des besagten Lookup-Eingabewertes, um das Vorhandensein des entsprechenden Eintrags in der besagten zweiten Datenbank (214) zu prüfen; und
wenn kein übereinstimmender Eintrag gefunden wird, Abwerfen des besagten MPLS-Packets und Markieren eines Sicherheitsalarms (126),
wenn der übereinstimmende Eintrag gefunden wird, Abrufen und Durchführen der assoziierten Aktion (218),
wobei der besagte Schritt des Kombinierens weiterhin umfasst:
Anhängen des besagten assoziierten Schlüssels an das besagte innere Label, oder
Hashing des besagten assoziierten Schlüssels zu dem besagten inneren Label.

2. Verfahren nach Anspruch 1, wobei das besagte Netzwerkausrüstungselement entweder einen Label Switched Router oder einen Label Edge Router umfasst.

3. Vorrichtung, welche verwendet wird, um ein Netzwerkausrüstungselement dafür zu programmieren, dass das Netzwerkausrüstungselement ein MPLS-Packet mit einem äußeren und einem inneren Label verarbeitet, wobei die Vorrichtung für das Netzwerkausrüstungselement zugängliche computernutzbare Medien umfasst, wobei die computernutzbaren Medien zumindest ein Computerprogramm umfassen, welches fähig ist, zu bewirken, dass das Netzwerkausrüstungselement Folgendes durchführt:
Einrichten einer ersten Datenbank mit Einträgen, welche gültigen äußeren Labels entsprechen;
Zuordnen eines Schlüssels zu jedem Eintrag in der besagten ersten Datenbank;
Einrichten einer zweiten Datenbank mit Einträgen, welche einer Kombination des besagten Schlüssels mit gültigen inneren Labels und mit den besagten gültigen inneren Labels assoziierten geeigneten Aktionen entsprechen;
Abrufen des besagten assoziierten Schlüssels, wenn das besagte äußere Label einen entsprechenden Eintrag in der besagten ersten Datenbank (213) hat;
Kombinieren des besagten assoziierten Schlüssels mit dem besagten inneren Label, um einen Lookup-Eingabewert für die besagte zweite Datenbank zu erzeugen;
Verwenden des besagten Lookup-Eingabewertes, um das Vorhandensein eines entsprechenden Eintrags in der besagten zweiten Datenbank (214) zu prüfen; und
wenn kein übereinstimmender Eintrag gefunden wird, Abwerfen des besagten MPLS-Packets und Markieren eines Sicherheitsalarms (126),
wenn der übereinstimmende Eintrag gefunden wird, Abrufen und Durchführen der assoziierten Aktion (218),
wobei der besagte Schritt des Kombinierens weiterhin umfasst:
Anhängen des besagten assoziierten Schlüssels an das besagte innere Label, oder
Hashing des besagten assoziierten Schlüssels zu dem besagten inneren Label.

4. Vorrichtung nach Anspruch 3, wobei das besagte Netzwerkausrüstungselement entweder einen Label Switched Router oder einen Label Edge Router umfasst.

## Revendications

1. Procédé exécuté dans un élément d'équipement réseau pour entraîner le traitement par l'élément d'équipement réseau d'un paquet MPLS présentant une étiquette externe et une étiquette interne, ledit procédé comprenant l'étape suivante :
établir une première base de données contenant des entrées correspondant à des étiquettes externes valides ; le procédé étant **caractérisé par** les étapes suivantes :
associer une clé à chaque entrée dans ladite première base de données ;
établir une deuxième base de données contenant des entrées correspondant à une combinaison de ladite clé avec des étiquettes internes valides et des actions appropriées associées auxdites étiquettes internes valides ;
récupérer ladite clé associée lorsque ladite étiquette externe présente une entrée correspondante dans ladite première base de données (213) ;
combiner ladite clé associée avec ladite étiquette interne pour générer une valeur d'entrée de consultation pour ladite deuxième base de données ;
utiliser ladite valeur d'entrée de consultation pour vérifier l'entrée correspondante dans ladite deuxième base de données (214) ; et
si aucune correspondance n'est trouvée, abandonner ledit paquet MPLS et signaler une alarme de sécurité (216),
si la correspondance est trouvée, récupérer et exécuter l'action associée (218),
dans lequel ladite étape de combinaison comprend en outre les étapes suivantes :
ajouter ladite clé associée à ladite étiquette interne ou
hacher ladite clé associée avec ladite étiquette interne.

2. Procédé selon la revendication 1 dans lequel ledit élément d'équipement de réseau comprend un routeur à commutation d'étiquettes ou un routeur de bord d'étiquette.

3. Appareil à utiliser dans la programmation d'un élément d'équipement de réseau pour entraîner le traitement par l'élément d'équipement de réseau d'un paquet MPLS présentant une étiquette externe et une étiquette interne, l'appareil comprenant des supports utilisables par un ordinateur auxquels l'élément d'équipement de réseau peut accéder, dans lequel les supports utilisables par un ordinateur comprennent au moins un programme informatique qui peut entraîner l'exécution des étapes suivantes par l'élément d'équipement de réseau :
établir une première base de données contenant des entrées correspondant à des étiquettes externes valides ;
associer une clé à chaque entrée dans ladite première base de données ;
établir une deuxième base de données contenant des entrées correspondant à une combinaison de ladite clé avec des étiquettes internes valides et des actions appropriées associées auxdites étiquettes internes valides ;
récupérer ladite clé associée lorsque ladite étiquette externe présente une entrée correspondante dans ladite première base de données (213) ;
combiner ladite clé associée avec ladite étiquette interne pour générer une valeur d'entrée de consultation pour ladite deuxième base de données ;
utiliser ladite valeur d'entrée de consultation pour vérifier une entrée correspondante dans ladite deuxième base de données (214) ; et
si aucune correspondance n'est trouvée, abandonner ledit paquet MPLS et signaler une alarme de sécurité (216),
si la correspondance est trouvée, récupérer et exécuter l'action associée (218).
dans lequel ladite étape de combinaison comprend en outre les étapes suivantes :
ajouter ladite clé associée à ladite étiquette interne ou
hacher ladite clé associée avec ladite étiquette interne.

4. Appareil selon la revendication 3 dans lequel ledit élément d'équipement de réseau comprend un routeur à commutation d'étiquettes ou un routeur de bord d'étiquette.
